# EUROPEAN PATENT SPECIFICATION

(11) **EP 0 656 960 B1**
(45) Date of publication and mention of the grant of the patent: **05.06.1996**
(21) Application number: 93919349.6
(22) Date of filing: 31.08.1993
(51) Int. Cl.: C25B 1/12

(54) **FEEDING SYSTEM OF ELECTROLYSIS LIQUID FOR PRESSURIZED ELECTROLYSIS APPARATUS USED IN PRODUCING HYDROGEN**
ZUFUHRSYSTEM FÜR ELEKTROLYTISCHE FLÜSSIGKEIT FÜR DRUCKELEKTROLYSEVORRICHTUNG BEI DER HERSTELLUNG VON WASSERSTOFF
SYSTEME D'ALIMENTATION DE LIQUIDE ELECTROLYTIQUE POUR APPAREIL D'ELECTROLYSE PRESSURISE UTILISE DANS LA PRODUCTION D'HYDROGENE

(30) Priority: 31.08.1992 FI 923906
(43) Date of publication of application: 14.06.1995
(73) Proprietor: NESTE OY, FIN-02150 Espoo (FI)
(72) Inventor: LEPPÄNEN, Jyrki, FIN-00970 Helsinki (FI); NIEMINEN, Jukka-Pekka, FIN-06400 Porvoo (FI)
(74) Representative: Pellmann, Hans-Bernd, Dipl.-Ing.
(86) International application number: FI9300345
(87) International publication number: WO9405832

(56) References cited:
- EP-A- 0 389 263
- DE-A- 3 837 354
- FR-A- 2 466 515

## Description

The present invention relates to a feeding system of electrolysis liquid for a pressurized electrolysis apparatus used for producing hydrogen, in which electrolysis apparatus electrolytic liquid is decomposed into hydrogen and oxygen in a pressurized electrolysis cell.

Hydrogen is an ideal and non-polluting source of energy in special applications in which no conventional energy sources are available. Therefore, for instance in devices using electric current and located in sparsely populated and rough regions photovoltaic modules can be used for producing the electric current. Such installations are frequently unmanned, requiring automatic or remote control operation. Also such installations have to be operated when there is no sunlight. Storing electricity only in batteries would require a large number of batteries, which are heavy in weight and require maintenance.

Using hydrogen for storing energy is one of the means to recover the surplus energy produced by solar cells, whereby water is decomposed with the aid of electricity into hydrogen and oxygen. Thereby, electricity can also be produced, if needed, with the aid of a fuel cell from hydrogen. In order to reduce the size of the hydrogen storages required, the hydrogen must, however, be pressurized, and additional energy must be used in the pressurization.

It is known in the art to accomplish the decomposition of water into hydrogen and oxygen in electrolytic cells operating under pressure and thus producing hydrogen directly in pressurized form, so that no separate compression is needed. However increased leakage is a drawback of pressurizing electrolytic cells.

It is also known in the art to place an electrolytic cell within a separate pressure shell, whereby the differential pressure between the inside and outside of the electrolytic cell substantially reduces and the leakages decrease. Thus, in an apparatus as for instance in patent publication FR-2466515, the pressure shell is pressurized with the aid of nitrogen gas, and the apparatus comprises members for maintaining the pressure within the electrolytic cell lower than the pressure of the pressure shell. Use of separate pressurizing gas requires, however, use of containers for the pressurizing gases, and need for supplementing the pressurizing gas. Thus the system disclosed in FR patent No. 2466515 is not suitable for installations operating e.g. automatically in remote areas.

It is known from GB patent No. 1518234 to place the electrolytic plates inside a pressure shell, whereby the pressure of hydrogen gas prevails inside the pressure shell. However, the design according to said patent comprises no closed electrolytic cell positioned within the pressure shell, but instead the electrodes used in decomposing an electrolytic liquid (HCl) are positioned hanging directly inside the pressure shell. The apparatus disclosed in GB patent No. 1518234 is an apparatus intended for large-scale production of hydrogen, having a great need of power, a complicated and expensive design, e.g. due to devices needed in purification, said apparatus not being intended for recovering oxygen.

In the Finnish patent applications FI-923903 and FI-923904 an electrolysis apparatus is disclosed for producing hydrogen from water, in which apparatus the electrolytic cell is placed inside a pressure shell and in which the pressure shell is pressurized with the aid of a gas produced in an electrolysis.

An electrolytic cell consumes electrolytic liquid, such as water, in producing hydrogen. The pressurization of a pressurized electrolytic cell (pressure e.g. 30 bar) can be carried out e.g. with the aid of a high-pressure pump, but drawbacks of said pumps are their availability, price, need of maintenance and high energy consumption.

The object of the present invention is to provide a feeding system of an electrolytic liquid in a pressurized electrolysis apparatus used for producing hydrogen, said system enabling elimination of the high-pressure pump in supplementing electrolytic liquid into a pressurized electrolytic cell.

A more detailed aim of the invention is to provide a feeding system of electrolytic liquid, in which the energy consumption is low and which is highly reliable in operation and advantageous in price.

The aims of the invention are achieved by means of a feeding system of an electrolytic liquid in a pressurized electrolysis apparatus, which is characterized in that the feeding system of the electrolytic liquid comprises a storage container under a lower pressure for the electrolytic liquid, a pressure-resistant intermediate container connected to a liquid separator of the electrolysis apparatus and to a storage container, and means for bringing the intermediate container to said lower pressure when said intermediate container is filled with electrolytic liquid from the storage container, and for bringing the intermediate container to the pressure of the liquid separator when the intermediate container is emptied into the liquid separator.

The electrolytic liquid fed into the electrolytic cell contains water but it may contain any auxiliary substances promoting the operation of the electrolytic cell used, such as acids or bases. The term "water" will below refer to any such electrolytic liquid.

The feeding system according to the invention thus consists of a storage container at a lower pressure and a pressure-resistant intermediate container connected to a water separator of the electrolysis apparatus and to a storage container at a lower pressure. The feeding system is provided with valves for bringing the intermediate container to lower pressure while being filled-in from the storage container, and for bringing the intermediate container to the pressure of the water separator when the intermediate container is emptied into the water separator. The electrolytic cell can be placed within the pressure shell pressurized with the pressure of a gas produced in the electrolytic cell.

In an alternative embodiment of the invention, the storage container can be placed at a lower position than the intermediate container. In this embodiment a pump is needed but a simple and inexpensive low-pressure pump is quite satisfying.

The electrolytic cell can be placed within a pressure-resistant pressure shell, and from the hydrogen side of the electrolytic cell the hydrogen is conducted through a line taken through the wall of the pressure shell into a hydrogen storage. The oxygen or hydrogen discharging from the electrolytic cell is allowed to enter the pressure shell. The pressure shell may also be filled with an inert liquid and pressurized with oxygen or hydrogen pressure. The oxygen pressure of the pressure shell is so controlled that it substantially follows to the pressure of the hydrogen in the electrolytic cell. The pressure control may be implemented, for instance, so that oxygen is discharged out of the pressure shell with the aid of a valve controlled by the pressure of the hydrogen storage. Preferably, the oxygen is, however, recovered and conducted to a separate oxygen container, whereby oxygen is conducted from the pressure shell into an oxygen container with the aid of a valve controlled with the pressure of the hydrogen storage.

It is conventional that the hydrogen gas and the oxygen gas from the electrolytic cell are first conducted through water separators for separating the water following the gases. The water separators can be placed inside the pressure shell, whereby the water separators need not be pressure-resistant. The water separators may as well be placed outside the pressure shell if the water separators are provided with a pressure-resistant shell.

The water separated in the water separators from the gases is returned into the electrolytic cell. According to one suitable procedure, the water from the water separator of the hydrogen gas is conducted to the water separator of the oxygen gas, from where the water is returned into the electrolytic cell. Hereby, the water separator of the hydrogen gas can be provided with surface height sensors to control a valve placed in the water return line. As the surface rises to the top height, the valve opens, and the water is able to flow from the water separator of the hydrogen gas to the water separator of the oxygen gas. After the surface has gone down into the lower height, the valve shuts down.

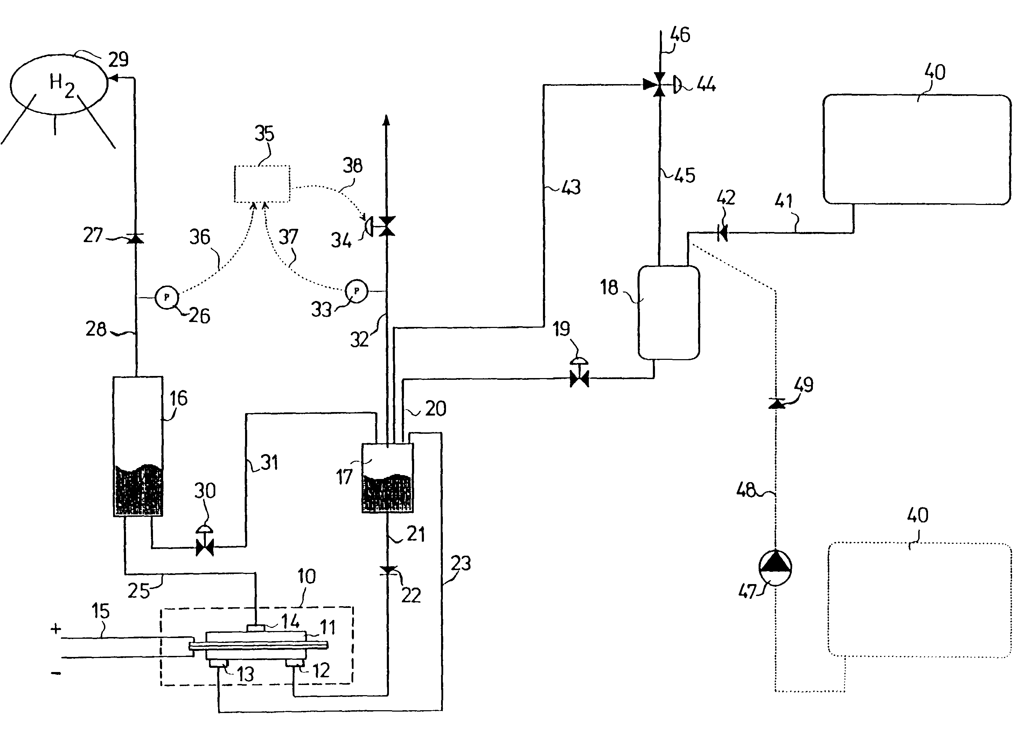

The invention is described in greater detail, referring to an advantageous embodiment of the invention presented in the figure of the accompanying drawing, to which the invention is not, however, intended to be exclusively limited.

The figure shows in broken lines a pressure container 10, which serves as a pressure shell. Inside the pressure shell 10 there is placed an electrolytic cell 11 provided with an inlet connector 12 for the electrolytic liquid, with outlet connectors 14 and 13 for hydrogen and oxygen, and respectively with electricity feeding lines 15. Electrolytic liquid, such as water, is conducted by means of gravitation into the electrolytic cell 11. The embodiment according to the figure presents water separators 16 and 17 for separating water from hydrogen and oxygen.

Water is fed into the electrolytic cell 11 through a water inlet line 20 into the water separator 17 of the oxygen gas, and therefrom further through a water inlet line 21 and a back pressure valve 22 positioned therein into the inlet connector 12, and further, into the electrolytic cell 11. The oxygen gas produced in the electrolytic cell 11 is conducted through an oxygen outlet connector 13 and an oxygen outlet line 23 to the water separator 17 of oxygen. The water following the oxygen gas is separated in the water separator 17 and it returns into the electrolytic cell 11 through line 21.

The hydrogen gas produced in the electrolytic cell 11 is conducted through a hydrogen outlet connector 14 and a hydrogen outlet line 25 to the water separator 16 of the hydrogen gas. From the water separator 16 a hydrogen outlet line 28 provided with a pressure sensor 26 and a back-pressure valve 27 leads to a hydrogen gas storage container 29. In addition, a water pipe 31 provided with a valve 30 is conducted from the water separator 16 of the hydrogen gas to the water separator 17 of the oxygen gas, whereby the water entering with the hydrogen gas can be returned to the electrolytic cell 11 in the above-described manner.

The oxygen gas is conducted from the inside space of the pressure shell 10 out to the oxygen outlet line 32 and further for instance into an oxygen container (not shown). The oxygen outlet line 32 is provided with a pressure sensor 33 and a valve 34 for controlling the pressure within the pressure shell 10.

The pressure control in the apparatus as shown in the figure can be accomplished for instance preferably so that a pressure controller 35 has been connected with signal leads 36 and 37 to hydrogen and oxygen pressure sensors 26,33 and according to a signal provided by said pressure sensors 26,33, the pressure controller 35 opens and shuts through signal line 38 the valve 34 in the oxygen outlet line 32 in order to maintain the pressure of the oxygen gas substantially the same as the hydrogen pressure in line 28 prior to the back pressure valve 27.

The water feeding system according to the invention comprises a storage container 40 for an electrolytic liquid, e.g. water, at a lower pressure and a pressure-resistant intermediate container 18, which in this embodiment is connected with the water separator 17 and with the water storage container 40 being at a lower pressure. The intermediate container 18 is via a valve 42 and a flow line 41 connected with the storage container 40 placed at a higher level than the intermediate container 18. The valve 42 can be a back pressure valve. The intermediate container 18 is via valve 19 and the flow line 20 connected with the water separator 17. The intermediate container 18 is furthermore via line 45 connected with a three-way valve 44. The water separator 17 is via line 43 connected with the three-way valve 44. The pressure balancing line to the three-way valve 44 is indicated by reference numeral 46.

The pressure-resistant intermediate container 18 is normally connected e.g. to a storage container 40 at atmospheric pressure and at the same time via lines 45,46 directly to the ambient pressure. Thereby the water flows from the storage container 40 with the aid of gravitation to the pressure-resistant intermediate container 18.

When liquid must be added into the electrolytic cell 11, e.g. when the lower limit value switch (not shown) in the water separator 17 tells the water surface to be at the lower limit level, the three-way valve 44 is turned to a position which opens a connection from the water separator 17 along line 43 and 45 to the intermediate container 18, whereby the pressure-resistant intermediate container 18 is at the same pressure as the water separator 17. When opening the valve 19, water runs away from the pressure-resistant container 18 to the water separator 17 until the upper limit value switch (not shown) in the water separator 17 sends a command so that the valve 19 shuts. Thereafter the three-way valve 44 is turned to a position which opens a connection from the intermediate container 18 along line 45 and 46 out to the atmosphere for letting the pressure off from the intermediate container 18. The pressure-resistant intermediate container 18 is automatically filled in with the aid of gravitation by the water running from the storage container 40. The intermediate container 18 can be provided With an upper surface limit value switch (not shown) to control the filling of the intermediate container 18.

The valves 19,44 used in the water supply system of the invention can be so selected that in the basic state, in which they most frequently are, they do not consume power. Therefore, the total energy consumption of the water supply system according to the invention remains very low.

If needed, the storage container 40 can be placed at a lower level than the pressure-resistant intermediate container 18, as shown by broken lines in the figure. In such instance, a pump 47 is needed to pump water from the storage container 40 through the line 48 and the back pressure valve 49 to the pressure-resistant intermediate container 18. In this alternative embodiment the pump 47 may, however, be a simple and inexpensive low-pressure pump because it is sufficient for the present purpose, and therefore no expensive high-pressure pump is needed.

The above-described embodiments are intended merely to demonstrate, not to limit, the invention.

## Claims

1. A feeding system of electrolytic liquid containing water in a pressurized electrolysis apparatus used for producing hydrogen, in which electrolysis apparatus water is decomposed into hydrogen and oxygen in a pressurized electrolytic cell (11), **characterized** in that the feed system of electrolytic liquid comprises an electrolytic liquid storage container (40) being at a lower pressure, a pressure-resistant intermediate container (18) connected to a liquid separator (17) of the electrolysis apparatus and to a storage container (40), and means (19,44) for bringing the intermediate container (18) to said lower pressure while filling-in the intermediate container (18) with electrolytic liquid from the storage container (40), and for bringing the intermediate container (18) to the pressure of the liquid separator (17) while emptying the intermediate container (18) into the liquid separator (17).

2. Water feeding system according to claim 1, **characterized** in that the storage container (40) is located higher than the intermediate container (18).

3. Water feeding system according to claim 1, **characterized** in that the storage container (40) is located lower than the intermediate container (18).

4. Water feeding system according to claim 3, **characterized** in that the storage container (40) is connected to the intermediate container (18) via a pump (47) and a flow line (48).

5. Water feeding system according to claim 4, **characterized** in that said flow line (48) is provided with a back pressure valve or another valve (49).

6. Water feeding system according to any one of claims 1 to 5, **characterized** in that the intermediate container (18) is connected via a flow line (20) provided with a valve (19) to the liquid separator (17).

7. Water feeding system according to any one of claims 1 to 6, **characterized** in that the liquid separator (17) is via a line (43) connected to a three-way valve (44) to which the intermediate container (18) is connected via a line (45).

## Patentansprüche

1. Zufuhrsystem für elektrolytische, wasserhaltige Flüssigkeit in einer Druckelektrolysevorrichtung bei der Herstellung von Wasserstoff, in welcher Elektrolysevorrichtung in einer druckbeaufschlagten elektrolytischen Zelle (11) Wasser in Wasserstoff und Sauerstoff zersetzt wird, **dadurch gekennzeichnet,** daß das Zufuhrsystem für elektrolytische Flüssigkeit einen Speicherbehälter (40) für elektrolytische Flüssigkeit, der bei einem unteren Druck gehalten wird, einen druckresistenten Zwischenbehälter (18), der mit einem Flüssigkeitsabscheider (17) der Elektrolysevorrichtung und mit dem Speicherbehälter (40) verbunden ist, und eine Einrichtung (19, 44) aufweist, um den Zwischenbehälter (18) auf den unteren Druck zu bringen, während elektrolytische Flüssigkeit von dem Speicherbehälter (40) in den Zwischenbehälter (18) eingefüllt wird, und um den Zwischenbehälter (18) auf den Druck des Flüssigkeitsabscheiders (17) zu bringen, während der Zwischenbehälter (18) in den Flüssigkeitsabscheider (17) entleert wird.

2. Wasserzufuhrsystem gemäß Patentanspruch 1, **dadurch gekennzeichnet,** daß der Speicherbehälter (40) über dem Zwischenbehälter (18) angeordnet ist.

3. Wasserzufuhrsystem gemäß Patentanspruch 1, **dadurch gekennzeichnet,** daß der Speicherbehälter (40) unter dem Zwischenbehälter (18) angeordnet ist.

4. Wasserzufuhrsystem gemäß Patentanspruch 3, **dadurch gekennzeichnet,** daß der Speicherbehälter (40) über eine Pumpe (47) und eine Durchflußleitung (48) mit dem Zwischenbehälter (18) verbunden ist.

5. Wasserzufuhrsystem gemäß Patentanspruch 4, **dadurch gekennzeichnet,** daß die Durchflußleitung (48) mit einem Rückschlagventil oder anderen Ventil (49) versehen ist.

6. Wasserzufuhrsystem gemäß einem der Patentansprüche 1 bis 5, **dadurch gekennzeichnet,** daß der Zwischenbehälter (18) über eine mit einem Ventil (19) versehenen Durchflußleitung (20) mit dem Flüssigkeitsabscheider (17) verbunden ist.

7. Wasserzufuhrsystem gemäß einem der Patentansprüche 1 bis 6, **dadurch gekennzeichnet,** daß der Flüssigkeitsabscheider (17) über eine Leitung (43) mit einem Dreiwegeventil (44) verbunden ist, mit welchem der Zwischenbehälter (18) über eine Leitung (45) verbunden ist.

## Revendications

1. Système d'alimentation en liquide électrolytique contenant de l'eau, dans un appareil d'électrolyse sous pression pour la production d'hydrogène, appareil d'électrolyse dans lequel de l'eau est décomposée en hydrogène et en oxygène dans une cellule (11) d'électrolyse sous pression, **caractérisé** en ce que le système d'alimentation en liquide électrolytique comporte un récipient (40) de stockage de liquide électrolytique, qui est à une pression plus basse, un récipient intermédiaire (18) résistant à la pression, relié à un séparateur (17) de liquides de l'appareil d'électrolyse et à un récipient de stockage (40), et un moyen (19, 44) pour mettre le récipient intermédiaire (18) à ladite pression plus basse tout en remplissant le récipient intermédiaire (18) avec du liquide électrolytique du récipient de stockage (40), et un moyen (19, 44) pour mettre le récipient intermédiaire (18) à la pression du séparateur (17) de liquide tout en vidant le récipient intermédiaire (18) dans le séparateur (17) de liquide.

2. Système d'alimentation en eau selon la revendication 1, **caractérisé** en ce que le récipient de stockage (40) se trouve plus haut que le récipient intermédiaire (18).

3. Système d'alimentation en eau selon la revendication 1, **caractérisé** en ce que le récipient de stockage (40) se trouve plus bas que le récipient intermédiaire (18).

4. Système d'alimentation en eau selon la revendication 3, **caractérisé** en ce que le récipient de stockage (40) est relié au récipient intermédiaire (18) par une pompe (47) et une conduite d'écoulement (48).

5. Système d'alimentation en eau selon la revendication 4, **caractérisé** en ce que ladite conduite d'écoulement (48) est munie d'un clapet de retenue ou autre clapet (49).

6. Système d'alimentation en eau selon l'une quelconque des revendications 1 à 5, **caractérisé** en ce que le récipient intermédiaire (18) est relié au séparateur (17) de liquides par une conduite d'écoulement (20) munie d'un clapet (19).

7. Système d'alimentation en eau selon l'une quelconque des revendications 1 à 6, **caractérisé** en ce que le séparateur (17) de liquide est relié par une conduite (43) à une vanne trois-voies (44) à laquelle le récipient intermédiaire (18) est relié par une conduite (45).
